# EUROPÄISCHE PATENTSCHRIFT

(11) **EP 1 736 843 B1**
(45) Veröffentlichungstag und Bekanntmachung des Hinweises auf die Patenterteilung: **26.08.2009**
(21) Anmeldenummer: 06115220.3
(22) Anmeldetag: 09.06.2006
(51) Int. Cl.: G05B 19/418, G05B 23/02

(54) **System und Verfahren zur RFID gestützten Anlagekonfiguration**
System and method for RFID supported system configuration
Système et procédé pour configurer une installation industrielle supportés par RFID

(30) Priorität: 15.06.2005 DE 102005027671
(43) Veröffentlichungstag der Anmeldung: 27.12.2006
(73) Patentinhaber: SIEMENS AKTIENGESELLSCHAFT, 80333 München (DE)
(72) Erfinder: Dinges, Clemens, 90587 Obermichelbach (DE); Schlereth, Michael, 91452 Wilhermsdorf (DE)

(56) Entgegenhaltungen:
- WO-A-01/35190
- WO-A-03/017015
- DE-A1- 10 335 035
- DE-A1- 19 812 908
- US-A1- 2003 102 367
- US-A1- 2003 171 827
- US-A1- 2004 203 874

## Beschreibung

Die Erfindung betrifft ein System und ein Verfahren zur Ermittlung und Überprüfung einer Konfiguration einer industriellen Anlage. Weiterhin betrifft die Erfindung eine industrielle Anlage, die ein derartiges System umfasst.

Die Erfindung kommt insbesondere bei einer Projektierung, einer Montage und/oder Inbetriebnahme einer industriellen Anlage für automatisierte Produktionsprozesse zum Einsatz. Hierbei muss sichergestellt sein, dass die Komponenten der Anlage kompatibel zueinander sind. Der geplante automatisierte Produktionsprozess stellt gewisse Anforderungen an die Leistungsfähigkeit und die mechanische oder elektrische Belastungsfähigkeit der eingesetzten Komponenten, deren Erfüllung spätesten vor der Inbetriebnahme der Anlage überprüft werden sollte. Für eine solche Überprüfung muss die Konfiguration der u. U. sehr komplex aufgebauten Anlage bekannt sein.

Beim Austausch von Komponenten (z.B. wegen eines Defekts oder einer Erweiterung) muss sichergestellt sein, dass die neue Komponente von ihren Leistungsmerkmalen denselben Anforderungen wie die vorherigen Komponenten genügt.

Auch wenn eine bestehende Anlage für einen neuen Produktions-/ bzw. Fertigungsprozess verwendet werden soll, müssen die aktuelle Konfiguration der Anlage bekannt und die Leistungsdaten der Komponenten in der Anlage bekannt sein. Nur so kann ein Anlagenbauer entscheiden, ob die bestehende Anlage für den neuen Prozess verwendet werden kann bzw. welche Umrüstmaßnahmen erforderlich sind. Ebenso muss beim Zusammenstellen von Teilanlagen oder Maschinen für eine neue Produktionsaufgabe gewährleistet werden, dass die Anlagenteile elektrisch, logisch, kommunikationstechnisch und mechanisch zusammen passen.

Computergesteuerte Baugruppen können bereits mit einem Identifikationsspeicher über ein Bussystem ausgelesen werden, um eine schnelle Ermittlung dieser Komponenten zu ermöglichen.

Aus DE 103 35 035 A1 ist ein System und ein Verfahren zur Identifizierung passiver Automatisierungskomponenten wie Sensoren, Aktoren, Kabeln, Kompensationsdosen etc. bekannt. Die Automatisierungskomponenten weisen jeweils eine insbesondere als RFID Chip ausgeführte Identifikationseinheit auf, die bei einer Aktivierung einen zur Identifikation der Automatisierungskomponente geeigneten Identifikationscode ausgibt.

Aus der US 2003/0171827 A1 ist ein anpassbares System mit einer Vielzahl anpassbarer Geräte bekannt, die miteinander interagieren und kommunizieren können, um einen Prozess zu beobachten und zu steuern. Jedes der Geräte kann mit einem oder mehreren Sensoren und/oder Steuerungsausgängen insbesondere drahtlos kommunizieren. Ferner ist eine Kommunikation zwischen den einzelnen Geräten und einer Workstation mittels eines Kommunikationsnetzwerks vorgesehen.

Aus der US 2003/0102367 A1 ist ein System zur automatisierten Steuerung eines Fertigungsprozesses bekannt, bei dem den zu fertigenden Objekten RFID Tags zugeordnet werden, in denen relevante Informationen wie eine Kennung, das entsprechende Material und Produktionsdaten gespeichert sind. Um zu überprüfen, ob das richtige Material am richtigen Ort zur richtigen Zeit ist, sind innerhalb des automatisierten Systems verschiedene Leseeinheiten vorgesehen, die die RFID Tags auslesen.

Der Erfindung liegt die Aufgabe zu Grunde, eine einfache Ermittlung und Überprüfung der Konfiguration einer Anlage zu ermöglichen.

Diese Aufgabe wird durch ein System nach Anspruch 1 gelöst.

Ferner wird die Aufgabe durch ein Verfahren nach Anspruch 12 gelöst.

Der Erfindung liegt die Erkenntnis zugrunde, dass das Engineering einer industriellen Anlage erheblich effizienter und sicherer gestaltet werden kann, wenn ein System zur schnellen Ermittlung und Überprüfung der aktuellen Konfiguration der Anlage zur Verfügung steht. Erfindungsgemäß werden hierzu Komponenten der industriellen Anlage mit einem RFID Chip ausgestattet. Innerhalb des RFID Chips ist eine Kennung abgelegt, die von einem Lesegerät ausgelesen werden kann.

Ein wichtiger Bestandteil der Erfindung ist die Datenbank, auf der insbesondere für das Engineering wesentlichen Eigenschaften der Komponenten abgelegt sind, die durch die auf den RFID Chips abgelegten Kennungen identifiziert werden. Anhand der auf der Datenbank abgelegten Eigenschaften der identifizierten Komponenten lässt sich mittels eines Regelwerks die Kompatibilität der eingebauten Komponenten überprüfen. Darüber hinaus kann so schon vor der Inbetriebnahme der Anlage überprüft werden, ob der auf der Anlage durchzuführende Prozess mit der aktuellen Anlagenkonfiguration durchgeführt werden kann. Beispielsweise wird hierbei überprüft, ob die Belastungsfähigkeit der eingesetzten Komponenten, z.B. der An triebsmotoren, den Anforderungen des Prozesses genügt. Darüber hinaus können mechanische Komponenten hinsichtlich einer erforderlichen Festigkeit oder Steifigkeit etc. überprüft werden. Diese Überprüfungen werden mit Hilfe der Eigenschaften in der Datenbank, bei denen es sich beispielsweise um die technischen Daten der eingesetzten Komponenten handelt, in Verbindung mit dem Regelwerk zur Kompatibilität überprüft.

Die Verwendung von RFID Chips zur Kennzeichnung der eingesetzten Komponenten ermöglicht es auf besonders elegante Weise, dass System zur Identifikation mechanischer und/oder elektrischer, insbesondere unvernetzter Baugruppen, vorzusehen.

Vorteilhafter Weise ist das System für einen Anlagenengineering und/oder eine Inbetriebnahme der der Anlage vorgesehen. Beispielsweise lässt sich mit Hilfe des Systems ein Reengineering einer bereits bestehenden Anlage für einen neuen Produktionsprozess sehr schnell und effektiv durchführen, indem zunächst mit Hilfe des Systems die aktuelle Konfiguration der industriellen Anlage ermittelt wird und überprüft wird, inwiefern diese Konfiguration für den neuen Produktionsprozess modifiziert werden muss. Hierfür sind insbesondere die auf der Datenbank hinterlegten Komponenteneigenschaften heranzuziehen.

Bei einer besonders vorteilhaften Ausführung des erfindungsgemäßen Systems bzw. Verfahrens ist die Verarbeitungseinheit zur Überprüfung der Kompatibilität der identifizierten Komponenten vorgesehen. Hierzu wird zunächst mit Hilfe der Leseeinheit eine Identifikation der Komponenten einer aktuellen Anlagenkonfiguration durchgeführt und anschließend anhand der auf der Datenbank hinterlegten Eigenschaften der Komponenten überprüft, in wie fern die einzelnen Anlagenkomponenten zueinander kompatibel sind. Die Kompatibilität betrifft dabei sowohl das Zusammenspiel der Komponenten untereinander (z.B. elektrische Eigenschaften, Busprotokolle) als auch die Eignung der Komponenten zur Erfüllung der gewünschten Produktionsaufgabe (Kompatibilität zwischen Anlage und gefordertem Prozess).

Weiterhin kann die Verarbeitungseinheit zur Ermittlung von Einbauorten der identifizierten Komponenten vorgesehen werden. Um dies zu ermöglichen, kann beispielsweise die Datenbank oder der RFID Chip zum Speichern der Einbauorte der identifizierten Komponenten vorgesehen werden. Alternativ kann aber auch die Verarbeitungseinheit zur Ermittlung der Einbauorte anhand einer örtlichen Position der Lesereinheit bei der Identifikation der Komponenten vorgesehen werden. In diesem Fall wird also die Position der Leseeinheit in dem Moment ausgewertet, in dem die entsprechende Komponente identifiziert wird.

Das System zur Ermittlung und Überprüfung der Konfiguration der industriellen Anlage kann auf verschiedene Weise in bereits bestehende Anlagenkomponenten integriert werden. Beispielsweise kann das System als Teil eines mobilen Programmiergerätes ausgeführt werden. Ein solches Programmiergerät wird beispielsweise in einen SPS-Inbetriebsetzer (SPS = Speicherprogrammierbare Steuerung eingesetzt. Alternativ kann das System als Teil einer speicherprogrammierbaren Steuerung eingesetzt werden. Ferner ist es denkbar, dass System als Teil eines Bedien- und Beobachtungssystems der Anlage auszuführen.

Eine weitere mögliche Ausführungsform ist dadurch gekennzeichnet, dass das System als autonome Einheit mit Mitteln zur Datenübertragung ausgeführt ist. Bei einer solchen Ausführungsform werden die Ergebnisse der Ermittlung und Überprüfung der Anlagenkonfiguration über ein Netzwerk an die oben genannten Einheiten (d.h. das mobile Programmiergerät, die speicherprogrammierbare Steuerung oder das Bedien- und Beobachtungssystem der Anlage) mit Hilfe der Datenübertragungsmittel gesendet. Mit einer solchen autonomen dezentralen Einheit können größere Bereiche der Anlage in die Überwachung mit einbezogen werden.

Im Folgenden wird die Erfindung anhand der in den Figuren dargestellten Ausführungsbeispiele näher beschrieben und erläutert. Es zeigen:
- FIG 1: eine schematische Darstellung eines Systems zur Ermittlung und Überprüfung einer Anlagenkonfiguration und
- FIG 2: ein Förderband mit RFID Chips zur Ermittlung und Überprüfung einer Anlagenkonfiguration.

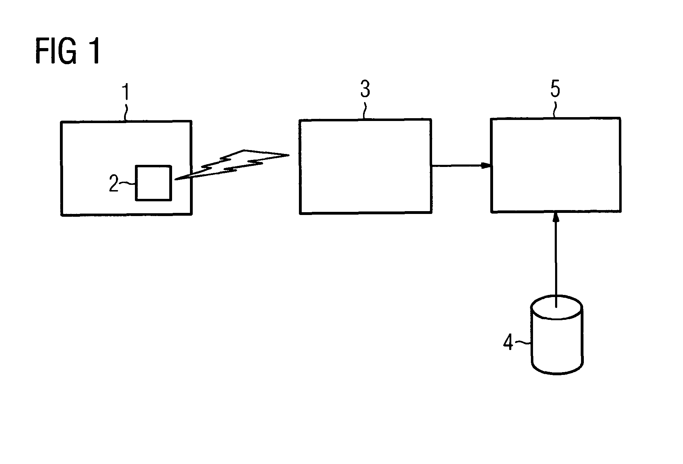

FIG 1 zeigt eine schematische Darstellung eines Systems zur Ermittlung und Überprüfung einer Anlagenkonfiguration. Es soll sich beispielsweise um eine industrielle automatisierte Fertigungsanlage handeln, von der in FIG 1 beispielhaft lediglich eine Komponente 1 dargestellt ist. Die Komponente 1 könnte z. B. stellvertretend für einen elektrischen Antriebsmotor eines Robotergelenkes stehen. Dieser Antriebsmotor 1 ist mit einem RFID Chip 2 versehen, der mit Hilfe einer Leseeinheit 3 ausgelesen werden kann. Bei der Leseeinheit 3 handelt es sich um eine RFID Sende-/Empfangsvorrichtung, mit der RFID Chips, auch als RFID Tags bzw. RFID Transponder bezeichnet, berührungslos ausgelesen werden können.

Innerhalb des RFID Chips 2 ist eine Kennung abgelegt, die eine eindeutige Identifizierung der Komponente 1 erlaubt. Die Kennung wird mit Hilfe der Leseeinheit 3 ausgelesen. Anschließend wird die Kennung von einer Verarbeitungseinheit 5 in einer Datenbank 4 gesucht. In dieser Datenbank 4 sind zu den in der Anlage vorhandenen Komponenten Eigenschaften hinterlegt und den entsprechenden Kennungen zugeordnet. Außerdem enthält die Datenbank Regelsätze, die die Kompatibilität zwischen elektrischen und mechanischen Komponenten enthält. Die Verarbeitungseinheit 5 ist nun in der Lage, anhand der mittels der Leseeinheit 3 ermittelten Kennung die entsprechenden Eigenschaften zu der Komponente 1 aus der Datenbank 4 zu extrahieren.

Die Verarbeitungseinheit kann optional auch z.B. mit einem Produktionsplanungssystem oder einem Anlagenengineeringsystem gekoppelt sein. Damit kann z.B. um auf Basis von Fertigungsplänen überprüft werden, ob die derzeitige Anlagenkonfiguration einen Fertigungsauftrag ausführen kann. Für eine Anlagenerweiterung kann die Verarbeitungseinheit 5 überprüfen, ob die geplante Erweiterung mit den vorhandenen Komponenten kompatibel ist.

Je nach Anwendungsfall kann die Leseeinheit verschieden genutzt/platziert sein:
- (mobiles) Programmiergerät mit Leseinheit:
   vor Ort Engineering oder Erfassung der Komponenten
- Leseeinheit im Automatisierungsgerät:
   Erfassung der Komponenten in der Umgebung der Automatisierungsgeräts
- dezentrale vernetzte Leseeinheiten:
   Nutzung der Leseeinheiten durch verschiedene Clients wie Programmiergerät oder Automatisierungsgerät

Anhand dieser Eigenschaften können nun verschiedene Aufgaben, insbesondere innerhalb einer Engineeringphase gelöst werden. Beispielsweise kann für die identifizierte Komponente 1 anhand der Komponenteneigenschaften eine Kompatibilitätsüberprüfung mit anderen innerhalb der industriellen Anlage installierten Komponenten durchgeführt werden. Beispielsweise können die Leistungsdaten des elektrischen Antriebs 1 genutzt werden, um zu überprüfen, ob die mit dem elektrischen Antrieb 1 verbundenen Kabel eine genügend hohe Stromtragfähigkeit aufweisen.

Ferner kann mit Hilfe des Systems überprüft werden, ob die Belastungsfähigkeit der industriellen Anlage bzw. der innerhalb der Anlage installierten Komponenten den Anforderungen eines Prozesses genügt, der auf der industriellen Anlage ablaufen soll. Mit Hilfe der Leseeinheit 3 werden hierzu zunächst sämtliche wesentliche Komponenten der Anlage identifiziert und von der Verarbeitungseinheit 5 die entsprechenden technischen Daten aus der Datenbank 4 extrahiert. Anhand dieser technischen Daten lässt sich überprüfen, ob die Belastungsfähigkeit der Einzelkomponenten den Erfordernissen des abzulaufenden Prozesses genügt. Eine solche Überprüfung kann automatisiert mit Hilfe eines geeigneten Engineeringsystems durchgeführt werden.

In bestimmten industriellen Umgebungen dürfen nur speziell vorgesehene Komponenten bzw. Baugruppen Verwendung finden. Beispielsweise dürfen in einer Fail Safe Umgebung nur bestimmte hierfür zulässige Baugruppen eingesetzt werden. Eine Überprüfung einer bereits bestehenden Industrieanlage lässt sich mit Hilfe des Systems sehr schnell und leicht durchführen. Darüber hinaus ist das System auch zur Lizenzierung einsetzbar oder für einen Echtheitsnachweis von Baugruppen. Eine derartige Überprüfung ist jederzeit vor Ort möglich, sowohl im laufenden Betrieb als auch vor der ersten Inbetriebnahme.

Das in FIG 1 dargestellte System hat den Vorteil, dass die Konfiguration der Anlage auch dann überprüft werden kann, wenn die Anlage nicht eingeschaltet ist. Dies ist beispielsweise bei Systemen, in denen an einen Bus angeschlossene Teilnehmer überprüft werden, die hierzu über einen Identifikationsspeicher verfügen, nicht möglich.

Insbesondere für Engineeringzwecke ist es vorteilhaft, dass die Konfiguration in dem dargestellten Beispiel schon überprüft werden kann, bevor die einzelnen Baugruppen in die Anlage eingebaut werden. Hierbei können sämtliche Arten von Bauelementen einbezogen werden; also nicht nur Bauelemente, die eine "Intelligenz" aufweisen.

Speziell im Hinblick auf Engineeringaufgaben ist es zweckmäßig, wenn der Anwender erlaubte Konfigurationen direkt vorgeben kann und so verhindern kann, dass nicht zugelassene Baugruppen in die Anlage eingebaut werden. Durch das System zur Ermittlung dieser Baugruppen ist ein Einbau nicht zugelassener Baugruppen schon frühzeitig möglich, in dem dieses System mit einem Engineeringsystem gekoppelt wird.

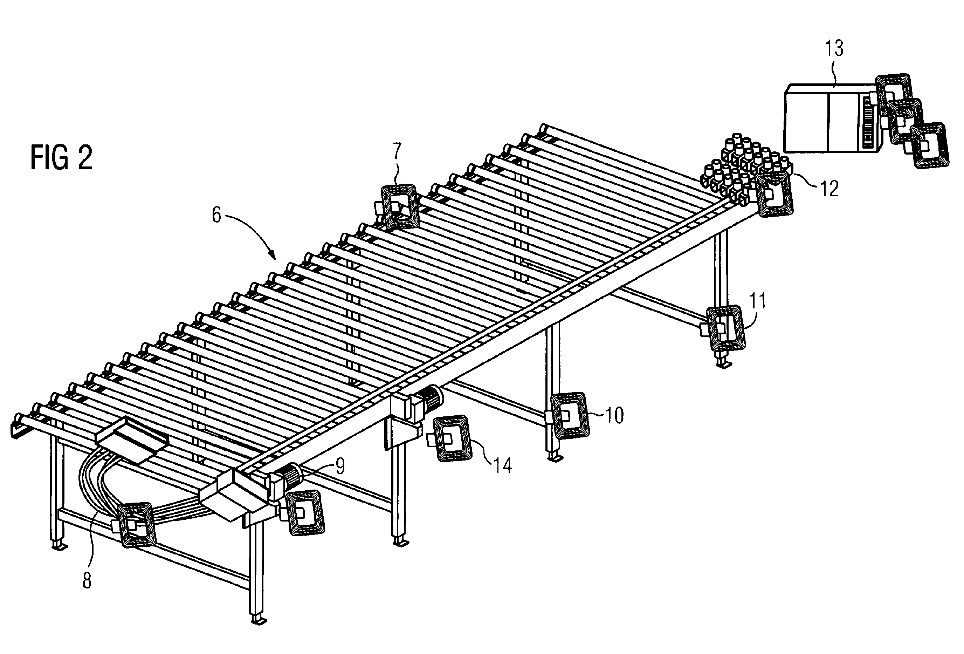

FIG 2 zeigt ein Förderband 6 mit RFID Chips 14 zur Ermittlung und Überprüfung einer Anlagenkonfiguration, wobei die RFID Chips 14 schematisch durch einen kleinen Rahmen angedeutet sind. Der Übersicht halber ist nur ein RFID Chip 14 in FIG 2 mit einem Bezugszeichen versehen.

Verschiedene Komponenten des Förderbandes sind mit einem RFID Chip 14 ausgestattet, um so ihre Identifikation mit Hilfe des Systems berührungslos zuzulassen. Beispielsweise weist das System eine Kabelklemme 12 auf, über die ein Stromkabel 8 angeschlossen werden kann, welches seinerseits einen Elektromotor 9 des Förderbandes 6 speist, um Rollen 7 des Förderbandes 6 anzutreiben. Anhand des Systems zur Ermittlung und Überprüfung der Anlagenkonfiguration kann nun getestet werden, ob die Kabelklemme 12 und das Stromkabel 8 den für den Elektromotor 9 notwendigen Leistungsbedarf decken können.

Auch rein mechanische Komponenten des Förderbandes 6 sind mit RFID Chips ausgestattet worden. Neben den bereits genannten Rollen 7 sind die Standbeine 10 des Förderbandes 6 sowie Schrauben 11 zur Montage des Standbeines 10 mit RFID Chips versehen worden. Das System erlaubt es beispielsweise zu überprüfen, ob die mechanische Festigkeit der angesprochenen Komponenten für einen auf dem Förderband 6 geplanten Transportprozess ausreicht.

Das Förderband 6 wird von einer speicherprogrammierbaren Steuerung 13 gesteuert. Die speicherprogrammierbare Steuerung 13 weist ebenfalls einen RFID Chip auf und ist somit von einer RFID Sende-/Empfangseinheit identifizierbar.

Als Einbauort des Systems zur Ermittlung und Überprüfung der Anlagenkonfiguration kommen verschiedene Komponenten in Frage. Beispielsweise kann das System direkt in die speicherprogrammierbare Steuerung 13 integriert sein. Alternativ kann das System in einem mobilen Programmiergerät installiert sein, mit dem sich die speicherprogrammierbare Steuerung in Betrieb setzen lässt. Ferner kann das System in ein HMI System integriert werden, mit dem sich das Förderband 6 von einem Benutzer steuern lässt. HMI ist eine Abkürzung für "Human Machine Interface". Schließlich kann das System auch als autonome Einheit ausgeführt werden, welches an ein Datennetzwerk angeschlossen ist. Diese autonome Einheit kann die identifizierten Kennungen über das Netzwerk an eine zentrale Datenbank weiterleiten. Beispielsweise wird anhand der Kennungen eine Überprüfung der auf der Datenbank hinterlegten technischen Eigenschaften der installierten Komponenten durchgeführt. Die Ergebnisse dieser Überprüfung werden anschließend an dezentrale Überwachungseinheiten, wie beispielsweise das bereits genannte HMI System gesendet.

Zusammenfassend betrifft die Erfindung ein System zur Ermittlung und Überprüfung einer Konfiguration einer industriellen Anlage. Sowohl elektrische als auch mechanische Komponenten der Anlage tragen einen RFID Transponder, in dem eine Kennung der entsprechenden Komponente gespeichert ist. Das System umfasst eine RFID Sende-/Empfangseinheit zum Auslesen der Kennungen. In einer Datenbank sind Komponenteneigenschaften wie technische Daten gespeichert, anhand derer insbesondere während eines Anlagenengineerings die Anlagenkonfiguration hinsichtlich Kompatibilität, Belastbarkeit, Leistungsfähigkeit oder sonstiger Prozessanforderungen getestet werden kann.

## Patentansprüche

1. System zur Ermittlung und Überprüfung einer Konfiguration einer industriellen Anlage, wobei Komponenten (1) der Anlage jeweils einen RFID Chip (2) aufweisen, in dem jeweils eine Kennung zur Kennzeichnung der zugeordneten Komponente (1) gespeichert ist, mit einer Leseeinheit (3) zur Identifikation der Kennungen, **dadurch gekennzeichnet, dass** das System
- eine Datenbank (4), in der den jeweiligen Kennungen Eigenschaften der durch diese **gekennzeichnet**en Komponenten (1) zugeordnet sind, wobei es sich bei den Eigenschaften um technische Daten der eingesetzten Komponenten (1) handelt, wobei die Datenbank außerdem Regelsätze enthält, und
- eine Verarbeitungseinheit (5) zur Ermittlung der Konfiguration der Anlage anhand der identifizierten Kennungen und zur Überprüfung anhand der Regelsätze, in wie fern die einzelnen Komponenten (1) zueinander kompatibel sind, und zur Überprüfung der Konfiguration hinsichtlich einer Eignung für einen von der Anlage durchzuführenden Prozess anhand der auf der Datenbank (4) gespeicherten Eigenschaften der Komponenten (1), derart, dass überprüft wird, ob die Belastungsfähigkeit der eingesetzten Komponenten (1) den Anforderungen des Prozesses genügt
umfasst.

2. System nach Anspruch 1,
wobei das System zur Identifikation mechanischer und/oder elektrischer insbesondere unvernetzter Baugruppen vorgesehen ist.

3. System nach Anspruch 1 oder 2,
wobei das System für ein Anlagenengineering und/oder eine Inbetriebnahme der Anlage vorgesehen ist.

4. System nach einem der vorhergehenden Ansprüche,
wobei die Verarbeitungseinheit (5) zur Ermittlung von Einbauorten der identifizierten Komponenten (1) vorgesehen ist.

5. System nach Anspruch 4,
wobei die Datenbank (4) oder der RFID Chip zum Speichern der Einbauorte der identifizierten Komponenten (1) vorgesehen ist.

6. System nach Anspruch 4,
wobei die Verarbeitungseinheit (5) zur Ermittlung der Einbauorte anhand einer örtlichen Position der Leseeinheit (3) in dem Moment der Identifikation der Komponenten (1) vorgesehen ist.

7. System nach einem der vorhergehenden Ansprüche,
wobei das System Teil eines mobilen Programmiergerätes ist.

8. System nach einem der Ansprüche 1 bis 6,
wobei das System Teil einer speicherprogrammierbaren Steuerung ist.

9. System nach einem der Ansprüche 1 bis 6,
wobei das System Teil eines Bedien- und Beobachtungssystems der Anlage ist.

10. System nach einem der Ansprüche 1 bis 6,
wobei das System als autonome Einheit mit Mitteln zur Datenübertragung ausgeführt ist.

11. Verfahren zur Ermittlung und Überprüfung einer Konfiguration einer industriellen Anlage, wobei Komponenten (1) der Anlage jeweils einen RFID Chip (2) aufweisen, in dem jeweils eine Kennung zur Kennzeichnung der zugeordneten Komponente (1) gespeichert ist, mit folgenden Verfahrensschritten:
- Identifikation der Kennungen mit einer Leseeinheit (3)und
- Ermittlung der Konfiguration der Anlage anhand der identifizierten Kennungen,
**gekennzeichnet durch** die weiteren Verfahrensschritte:
- Überprüfung der Konfiguration hinsichtlich einer Kompatibilität der einzelnen Komponenten zueinander und einer Eignung für einen von der Anlage durchzuführenden Prozess anhand von auf einer Datenbank (3) gespeicherten Eigenschaften der Komponenten (1), wobei mit der Datenbank (3) die Eigenschaften der jeweiligen Kennung zugeordnet sind, wobei es sich bei den Eigenschaften um technische Daten der eingesetzten Komponenten (1) handelt, wobei die Datenbank außerdem Regelsätze enthält, und wobei anhand der Regelsätze überprüft wird, ob die Belastungsfähigkeit der eingesetzten Komponenten (1) den Anforderungen des Prozesses genügt.

12. Verfahren nach Anspruch 11,
wobei das Verfahren zur Identifikation mechanischer und/oder elektrischer insbesondere unvernetzter Baugruppen vorgesehen ist.

13. Verfahren nach Anspruch 11 oder 12,
wobei das Verfahren für ein Anlagenengineering und/oder eine Inbetriebnahme der Anlage vorgesehen ist.

14. Verfahren nach einem der Ansprüche 11 bis 13,
wobei Einbauorte der identifizierten Komponenten (1) ermittelt werden.

15. Verfahren nach Anspruch 14,
wobei die Einbauorte der identifizierten Komponenten (1) auf der Datenbank (4) oder dem RFID Chip (14) gespeichert werden.

16. Verfahren nach Anspruch 14,
wobei die Einbauorte anhand einer örtlichen Position der Leseeinheit (3) in dem Moment der Identifikation der Komponenten (1) ermittelt werden.

17. Verfahren nach einem der Ansprüche 11 bis 16,
wobei das Verfahren in einem mobilen Programmiergerät durchgeführt wird.

18. Verfahren nach einem der Ansprüche 11 bis 16,
wobei das Verfahren in einer speicherprogrammierbaren Steuerung durchgeführt wird.

19. Verfahren nach einem der Ansprüche 11 bis 16,
wobei das Verfahren in einem Bedien- und Beobachtungssystems der Anlage durchgeführt wird.

20. Verfahren nach einem der Ansprüche 11 bis 16,
wobei das Verfahren in einer autonomen Einheit mit Mitteln zur Datenübertragung durchgeführt wird.

## Claims

1. System for determining and examining a configuration of an industrial plant, with components (1) of the plant each including an RFID chip (2) in which an identifier is stored for identifying the assigned component (1) in each instance, with a reader (3) for identifying the identifiers,
**characterised in that** the system includes
- a database (4), in which characteristics of the components (1) **characterised** hereby are assigned to the respective identifiers, with the characteristics being technical data of the used components (1), with the database also containing sets of rules, and
- a processing unit (5) for determining the configuration of the plant on the basis of the identified characteristics and to examine, on the basis of the sets of rules, how compatible the individual components (1) are to one another, and to monitor the configuration in respect of its suitability to a process to be implemented by the plant on the basis of the characteristics of the components (1) stored on the database (4), such that an examination is carried out to determine whether the load-bearing capability of components (1) used satisfies the requirements of the process.

2. System according to claim 1,
with the system being provided for identifying mechanical and/or electrical, in particular non-networked modules.

3. System according to claim 1 or 2,
with the system being provided for plant engineering and/or commissioning of the plant.

4. System according to one of the preceding claims,
with the processing unit (5) being provided for determining installation sites of the identified components (1).

5. System according to claim 4,
with the database (4) or the RFID chip being provided for storing the installation sites of the identified components (1).

6. System according to claim 4,
with the processing unit (5) being provided for determining the installation sites on the basis of a local position of the reader (3) at the time of identifying the components (1).

7. System according to one of the preceding claims,
with the system being part of a mobile programming device,

8. System according to one of claims 1 to 6,
with the system being part of a programmable logic controller.

9. System according to one of claims 1 to 6,
with the system being part of an operation and observation system of the plant.

10. System according to one of claims 1 to 6,
with the system being embodied as an autonomous unit with means for data transmission.

11. Method for determining and monitoring a configuration of an industrial plant, with components (1) of the plant each including an RFID chip (2), in which an identifier for identifying the assigned components (1) is stored in each instance, comprising the following method steps:
- identifying the characteristics with a reader (3) and
- determining the configuration of the plant with the aid of the identified identifiers,
**characterised by** the additional method steps:
- examining the configuration in respect of compatibility between the individual components and suitability to a process to be implemented by the plant on the basis of characteristics of the components (1) stored on a database (3), with the characteristics being assigned to the respective identifier with the database (3), with the characteristics being technical data of the used components (1), with the database also containing sets of rules, and with the standard set of rules examining whether the load-bearing capability of the components (1) used satisfies the requirements of the process.

12. Method according to claim 11,
with the method being provided for identifying mechanical and/or electrical, in particular non-networked modules,

13. Method according to claim 11 or 12,
with the method being provided for a plant engineering and/or a commissioning of the plant.

14. Method according to one of claims 11 to 13,
with installation sites of the identified components (1) being determined.

15. Method according to claim 14,
with the installation sites of the identified components (1) being stored on the database (4) or the RFID chip (14).

16. Method according to claim 14,
with the installation sites being determined on the basis of a local position of the reader (3) at the time of identifying the components (1).

17. Method according to one of claims 11 to 16, with the method being implemented in a mobile programming device.

18. Method according to one of claims 11 to 16, with the method being implemented in a programmable logic controller.

19. Method according to one of claims 11 to 16, with the method being implemented in an operation and observation system.

20. Method according to one of claims 11 to 16, with the method being implemented in an autonomous unit with means for data transmission.

## Revendications

1. Système de détermination et de vérification d'une configuration d'une installation industrielle, des composants (1) de l'installation présentant respectivement une puce RFID (2), dans laquelle est respectivement mémorisé un identificateur destiné à **caractérisé** le composant correspondant (1), comprenant une unité de lecture (3) pour l'identification des identificateurs, **caractérisé en ce que** le système comprend
- une banque de données (4), dans laquelle sont attribuées aux identificateurs respectifs, des caractéristiques des composants (1), **caractérisés par** ces identificateurs, les caractéristiques étant des données techniques des composants utilisés (1), la banque de données contenant en outre des ensembles de règles, et
- une unité de traitement (5) destinée à déterminer la configuration de l'installation à l'aide des identificateurs identifiés et à vérifier, à l'aide des ensembles de règles, dans quelle mesure les différents composants (1) sont compatibles entre eux, et à vérifier la configuration quant à une aptitude à un processus à réaliser par l'installation à l'aide des caractéristiques des composants (1), mémorisées dans la banque de données (4), de manière à ce qu'il soit vérifié si la capacité de chargement des composants utilisés (1) suffit aux exigences du processus.

2. Système selon la revendication 1,
le système étant ménagé pour l'identification d'ensembles mécaniques et/ou électriques, notamment non interconnectés.

3. Système selon la revendication 1 ou 2,
le système étant ménagé pour une ingénierie d'installation et/ou une mise en service de l'installation.

4. Système selon l'une quelconque des revendications précédentes,
l'unité de traitement (5) étant ménagée pour déterminer des emplacements de montage des composants identifiés (1).

5. Système selon la revendication 4,
la banque de données (4) ou la puce RFID étant ménagée pour mémoriser les emplacements de montage des composants identifiés (1).

6. Système selon la revendication 4,
l'unité de traitement (5) étant ménagée pour déterminer les emplacements de montage à l'aide d'une position locale de l'unité de lecture (3) au moment de l'identification des composants (1).

7. Système selon l'une quelconque des revendications précédentes,
le système faisant partie d'un appareil de programmation mobile.

8. Système selon l'une quelconque des revendications 1 à 6,
le système faisant partie d'une commande programmable.

9. Système selon l'une quelconque des revendications 1 à 6,
le système faisant partie d'un système de commande et d'observation de l'installation.

10. Système selon l'une quelconque des revendications 1 à 6,
le système étant réalisé en tant qu'unité autonome comprenant des moyens destinés à la transmission de données.

11. Procédé de détermination et de vérification d'une configuration d'une installation industrielle, des composants (1) de l'installation présentant respectivement une puce RFID (2), dans laquelle est respectivement mémorisé un identificateur destiné à caractériser le composant correspondant (1), comprenant les étapes de procédé suivantes :
- identification des identificateurs à l'aide d'une unité de lecture (3) et
- détermination de la configuration de l'installation à l'aide des identificateurs identifiés,
caracatérisé par les étapes de procédé supplémentaires :
- vérification de la configuration quant à la compatibilité des différents composants entre eux et quant à une aptitude à un processus à réaliser par l'installation à l'aide de caractéristiques des composants (1), mémorisées dans une banque de données (3), des caractéristiques étant attribuées à l'identificateur respectif à l'aide de la banque de données (3), les caractéristiques étant des données techniques des composants utilisés (1), la banque de données contenant en outre des ensembles de règles, et une vérification si la capacité de chargement des composants utilisés (1) suffit aux exigences du processus, étant réalisée à l'aide des ensembles de règles.

12. Procédé selon la revendication 11,
le procédé étant prévu pour l'identification d'ensembles mécaniques et/ou électriques, notamment non interconnectés.

13. Procédé selon la revendication 11 ou 12,
le procédé étant prévu pour une ingénierie d'installation et/ou une mise en service de l'installation.

14. Procédé selon l'une quelconque des revendications 11 à 13, des emplacements de montage des composants identifiés (1) étant déterminés.

15. Procédé selon la revendication 14,
les emplacements de montage des composants identifiés (1) étant mémorisés dans la banque de données (4) ou sur la puce RFID (14).

16. Procédé selon la revendication 14,
les emplacements de montage étant déterminés à l'aide d'une position locale de l'unité de lecture (3) au moment de l'identification des composants (1).

17. Procédé selon l'une quelconque des revendications 11 à 16, le procédé étant réalisé dans un appareil de programmation mobile.

18. Procédé selon l'une quelconque des revendications 11 à 16, le procédé étant réalisé dans une commande.

19. Procédé selon l'une quelconque des revendications 11 à 16, le procédé étant réalisé dans un système de commande et d'observation de l'installation.

20. Procédé selon l'une quelconque des revendications 11 à 16, le procédé étant réalisé dans une unité autonome comprenant des moyens destinés à la transmission de données.
